# EUROPEAN PATENT SPECIFICATION

(11) **EP 4 470 925 B1**
(45) Date of publication and mention of the grant of the patent: **27.08.2025**
(21) Application number: 24206863.3
(22) Date of filing: 20.12.2021
(51) Int. Cl.: B64D 37/30, B64D 37/04, B64C 7/00

(54) **AIRCRAFT WITH HYDROGEN STORAGE TANKS**
FLUGZEUG MIT WASSERSTOFFSPEICHERTANKS
AÉRONEF AVEC RÉSERVOIRS DE STOCKAGE D'HYDROGÈNE

(30) Priority: 19.01.2021 GB 202100665
(43) Date of publication of application: 04.12.2024
(62) Divisional of application: 21215797.8
(73) Proprietor: Rolls-Royce plc, London N1 9FX (GB)
(72) Inventor: Dean, Eric, Derby, DE24 8BJ (GB)
(74) Representative: Rolls-Royce plc

(56) References cited:
- WO-A1-2021/148335
- US-A- 4 796 839
- US-A1- 2004 245 382
- US-A1- 2010 170 997
- KHANDELWAL BHUPENDRA ET AL: "Hydrogen powered aircraft : The future of air transport", PROGRESS IN AEROSPACE SCIENCES, OXFORD, GB, vol. 60, 22 January 2013 (2013-01-22), pages 45 - 59, XP028556142, ISSN: 0376-0421, DOI: 10.1016/J.PAEROSCI.2012.12.002

## Description

### TECHNICAL FIELD

The invention relates to an aircraft having hydrogen storage tanks, especially tanks for storage of gaseous hydrogen to be used as a fuel for aircraft propulsion, for example by use in a fuel cell system and/or a hydrogen-burning gas turbine engine.

### BACKGROUND

Use of hydrogen as a fuel in transport applications, including aeronautical applications, is of interest due to the absence of carbon dioxide generation at the point of use. However, storage of gaseous hydrogen on an aircraft requires a significantly greater fuel storage volume compared to that of a conventional aircraft. For many flight missions, conventional aircraft designs are therefore not appropriate for hydrogen-fuelled aviation. If a conventional aircraft is fitted with hydrogen storage tanks, the usable volume within the aircraft's interior is substantially reduced if the aircraft is intended to maintain its original range and payload.

### BRIEF SUMMARY

According to the present invention, an aircraft comprises a fuselage and first, second, third and fourth elongate cylindrical hydrogen storage tanks mounted to the exterior of the fuselage and extending parallel thereto, the first to fourth tanks being disposed vertically above a horizontal plane containing the wing tips of the aircraft with the aircraft on the ground or in level flight, the aircraft further comprising an aerodynamic fairing, the aerodynamic fairing and the fuselage enclosing the hydrogen storage tanks and wherein the first and second tanks have a first diameter and are mounted adjacent first and second wings of the aircraft respectively on respective lateral sides of the fuselage and the third and fourth tanks have a second diameter less than the first diameter and are mounted adjacent the first and second tanks respectively.

Prior art document US 2010/170997 A1 according to its description describes an airplane, in which the fuel tanks are arranged in wings and partly in sidewalls of the airplane inside a fuselage.

The aircraft may comprise at least one of a hydrogen-fuelled fuel-cell system and a hydrogen-burning gas turbine engine, and a conveying system arranged to convey hydrogen from the hydrogen storage tanks to the hydrogen fuel-cell and/or the hydrogen-burning gas turbine engine.

### BRIEF DESCRIPTION OF THE DRAWINGS

Embodiments of the invention are described below by way of example only and with reference to the accompanying drawing in which:

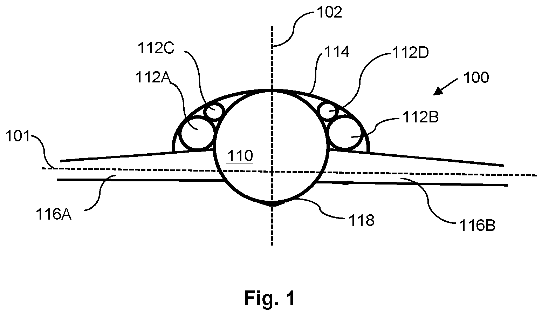

- Figure 1: shows a transverse cross-section of an example aircraft of the invention.

### DETAILED DESCRIPTION

Figure 1 shows a transverse cross-section of an example aircraft 100 of the invention, the aircraft 100 comprising a fuselage 118, wings 116A, 116B, a first pair of like elongate cylindrical hydrogen storage tanks 112A, 112B having a first diameter, a second pair of like elongate cylindrical hydrogen storage tanks 112C, 112D having a second diameter smaller than the first diameter and an aerodynamic fairing 114. Each of the tanks 112A, 112B is mounted to the exterior of the fuselage 518 and is in contact with a respective wing 116A, 116B of the aircraft 100. Tanks 112C, 112D are each mounted in contact with the fuselage 118 of the aircraft 500 and in contact with a respective one of the tanks 112A, 112B. The fairing 114 encloses the hydrogen storage tanks 112A-D and forms a continuous air-washed surface together with a lower portion of the fuselage 118, except at the position of the wings 116A, 116B. The fairing 118 has portions fore and aft of the hydrogen storage tanks 112A-D. With the aircraft 100 on the ground or in level flight, a vertical plane 102 bisects the fuselage 118; and a horizontal plane 101 contains the tips of the wings 116A, 116B. The interior 110 of the fuselage 118 provides space for passengers and/or cargo in use of the aircraft 100.

## Claims

1. An aircraft (100) comprising a fuselage (118) and first, second, third and fourth elongate cylindrical hydrogen storage tanks (112A-D) mounted to the exterior of the fuselage and extending parallel thereto, the first to fourth tanks being disposed vertically above a horizontal plane (101) containing wing tips of the aircraft with the aircraft on the ground or in level flight, the aircraft further comprising an aerodynamic fairing (114), the aerodynamic fairing and the fuselage enclosing the hydrogen storage tanks and wherein the first and second tanks (112A, 112B) have a first diameter and are mounted adjacent first (116A) and second (116B) wings of the aircraft respectively on respective lateral sides of the fuselage and the third and fourth tanks (112C, 112D) have a second diameter less than the first diameter and are mounted adjacent the first and second tanks respectively.

2. An aircraft according to claim 1 and comprising at least one of a hydrogen-fuelled fuel-cell system and a hydrogen-burning gas turbine engine, and further comprising a conveying system arranged to convey hydrogen from the hydrogen storage tanks to the hydrogen fuel-cell and/or the hydrogen-burning gas turbine engine.

## Patentansprüche

1. Flugzeug (100), umfassend einen Rumpf (118) und einen ersten, zweiten, dritten und vierten länglichen zylindrischen Wasserstoffspeichertank (112A-D), die an der Außenseite des Rumpfes montiert sind und sich parallel dazu erstrecken, wobei der erste bis vierte Tank vertikal über einer horizontalen Ebene (101) angeordnet sind, die Flügelspitzen des Flugzeugs enthält, wobei das Flugzeug auf dem Boden oder im Horizontalflug ist, wobei das Flugzeug ferner eine aerodynamische Verkleidung (114) umfasst, wobei die aerodynamische Verkleidung und der Rumpf die Wasserstoffspeichertanks umschließen und wobei der erste und zweite Tank (112A, 112B) einen ersten Durchmesser aufweisen und angrenzend an den ersten (116A) bzw. den zweiten (116B) Flügel des Flugzeugs an jeweiligen lateralen Seiten des Rumpfes montiert sind und der dritte und vierte Tank (112C, 112D) einen zweiten Durchmesser aufweisen, der kleiner als der erste Durchmesser ist, und angrenzend an den ersten bzw. den zweiten Tank montiert sind.

2. Flugzeug nach Anspruch 1 und umfassend mindestens eines von einem wasserstoffbetriebenen Brennstoffzellensystem und einem wasserstoffverbrennenden Gasturbinentriebwerk und ferner umfassend ein Fördersystem, das angeordnet ist, um Wasserstoff von den Wasserstoffspeichertanks zu der Wasserstoffbrennstoffzelle und/oder dem wasserstoffverbrennenden Gasturbinentriebwerk zu fördern.

## Revendications

1. Aéronef (100) comprenant un fuselage (118) et des premier, deuxième, troisième et quatrième réservoirs cylindriques allongés de stockage d'hydrogène (112A-D) montés à l'extérieur du fuselage et s'étendant parallèlement à celui-ci, les premier à quatrième réservoirs étant disposés verticalement au-dessus d'un plan horizontal (101) contenant des extrémités d'aile de l'aéronef avec l'aéronef au sol ou en vol en palier, l'aéronef comprenant en outre un carénage aérodynamique (114), le carénage aérodynamique et le fuselage entourant les réservoirs de stockage d'hydrogène, et lesdits premier et deuxième réservoirs (112A, 112B) présentant un premier diamètre et étant respectivement montés adjacents à des première (116A) et seconde (116B) ailes de l'aéronef sur des côtés latéraux respectifs du fuselage et lesdits troisième et quatrième réservoirs (112C, 112D) présentant un second diamètre inférieur au premier diamètre et étant respectivement montés adjacents aux premier et deuxième réservoirs.

2. Aéronef selon la revendication 1 et comprenant au moins un élément parmi un système de pile à combustible alimenté en hydrogène et un moteur à turbine à gaz brûlant de l'hydrogène, et comprenant en outre un système de transport conçu pour transporter de l'hydrogène des réservoirs de stockage d'hydrogène à la pile à combustible à hydrogène et/ou au moteur à turbine à gaz brûlant de l'hydrogène.
